Europäisches Patentamt

European Patent Office

Office européen des brevets

(11) Publication number: **0 247 269 B1**

# EUROPEAN PATENT SPECIFICATION

(45) Date of publication of patent specification: **15.05.91**  (51) Int. Cl.⁵: **A46B 7/10, A46B 5/06**

(21) Application number: **86830239.9**

(22) Date of filing: **03.09.86**

(54) **A rotary brush for a motor vehicle washing installation.**

(30) Priority: **28.05.86 IT 2058786**

(43) Date of publication of application:
**02.12.87 Bulletin 87/49**

(45) Publication of the grant of the patent:
**15.05.91 Bulletin 91/20**

(84) Designated Contracting States:
**AT BE CH DE FR GB LI NL SE**

(56) References cited:
**GB-A- 1 364 326**
**US-A- 1 775 186**
**US-A- 3 067 444**
**US-A- 3 643 282**

(73) Proprietor: **FAVAGROSSA EDOARDO & FIGLIO**
**Via Lepanto, 51**
**I-26040 Roncadello (Cremona)(IT)**

(72) Inventor: **Favagrossa, Edoardo**
**Via Lepanto, 51**
**I-26040 Roncadello Cremona(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

## Description

The present invention relates to a rotary brush for a motor vehicle washing installation, and in particular to a rotary brush having a plurality of sets of fibres of different lengths disposed in such a way as to brush the body of the motor vehicle with a substantially sinusoidal or effectively reciprocating movement.

There has been a significant development in recent times of motor vehicle washing installations, that is to say those installations equipped for washing motor vehicles in an almost automatic manner. The basic equipment of such motor vehicle washing installations comprises a series of rotary brushes arranged in suitable positions on horizontal and vertical axes positioned above and to either side of the motor vehicle to be washed. The brushes have a central core and a plurality of "bristles" usually formed by sets of synthetic fibres which in use of the installation are rubbed or wiped over the surface of the vehicle to be washed as the brush is rotated, in such a way as to remove dirt from it in combination with a liquid, usually water, sprayed onto the vehicle at the same time. It has been found, however, that in some cases solid particles of dirt cannot be entirely removed by the wiping or rubbing action of the brushes, and remain on the body of the motor vehicle. Over a long period of time such particles act as abrasive elements which can cause damage to the paint work of the motor vehicle body itself.

Moreover, with rotary brushes of conventional type the action of the bristles is strongly repetitive in that they pass only in one direction over the vehicle body, that is rigorously parallel to the length of the motor vehicle. Consequently, the washing operation performed by such an installation cannot always obtain complete and uniform cleaning of the bodywork of the motor vehicle being cleaned.

The US-A-3 643 282 reference discloses a rotary brush for a motor vehicle washing installation comprising a tubular core around which are wrapped a plurality of flexible strip-like elements the length of which is such that they can each be wrapped once around the core in adjacent positions along the length thereof, each strip-like element having a first face with a multiplicity of cylindrical sockets for receiving tufts of fibres and a second face having a plurality of studs which come into contact with the core itself.

The present invention seeks therefore to overcome the above-described disadvantage, by providing a rotary brush for a motor vehicle washing installation which is able to perform an effective and complete cleaning of the motor vehicle body being washed.

According to the present invention the above aim is achieved by rotary brush for a motor vehicle washing installation, having the features of the characterizing portion of the main claim.

One advantage of the present invention is that the fibres of the brush, because they are in sets having a different length, can exert differing forces on the dirt particles on the body of the motor vehicle being washed thereby more effectively dislodging them to be washed away by the water. In a preferred embodiment of the invention, the line separating adjacent sets of bristles of different length is inclined at an angle to the axis of the core, preferably in the region of 45° thereto.

Another advantage of the brush of the present invention is that it is able to offer the widest guarantees of reliability and security in use.

One embodiment of the invention is described in detail below with reference to the accompanying drawings, in which:

Figure 1 is a schematic front view of a motor vehicle washing installation equipped with a series of brushes formed as embodiments of the present invention;

Figure 2 is a schematic perspective view illustrating the application of a set of fibres to a strip-like support element;

Figure 3 is a front view of a portion of a strip-like element viewed from the side from which the fibres project:

Figure 4 is a cross section taken on the line IV-IV of Figure 3, showing the same portion of the strip-like element;

Figure 5 is a schematic view of the arrangement of the strip-like elements on the tubular support core; and

Figures 6,7,8 and 9 are views of the brush of the invention in four successive positions each separated by one quarter of a revolution from the next.

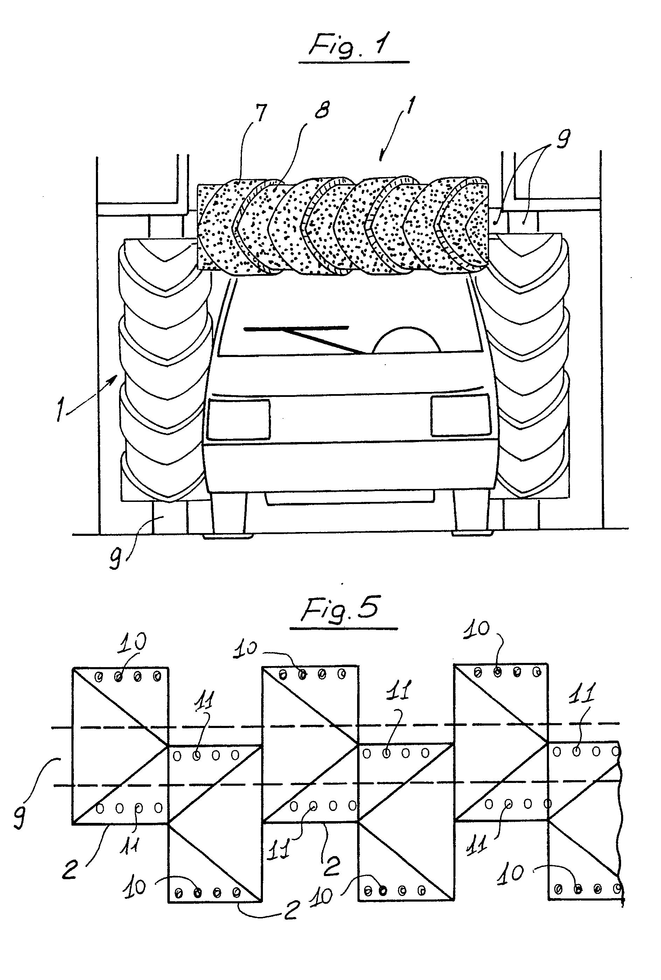

With reference now to the attached drawings, the rotary brush of the present invention is intended to be used in motor vehicle washing installations 1 such as that generally shown in Figure 1, which is equipped with several such brushes. Each brush is constituted by a plurality of substantially strip-like elements 2 formed of appropriate elastomeric materials having an adequate flexibility, and each wrapped around a central core 9.

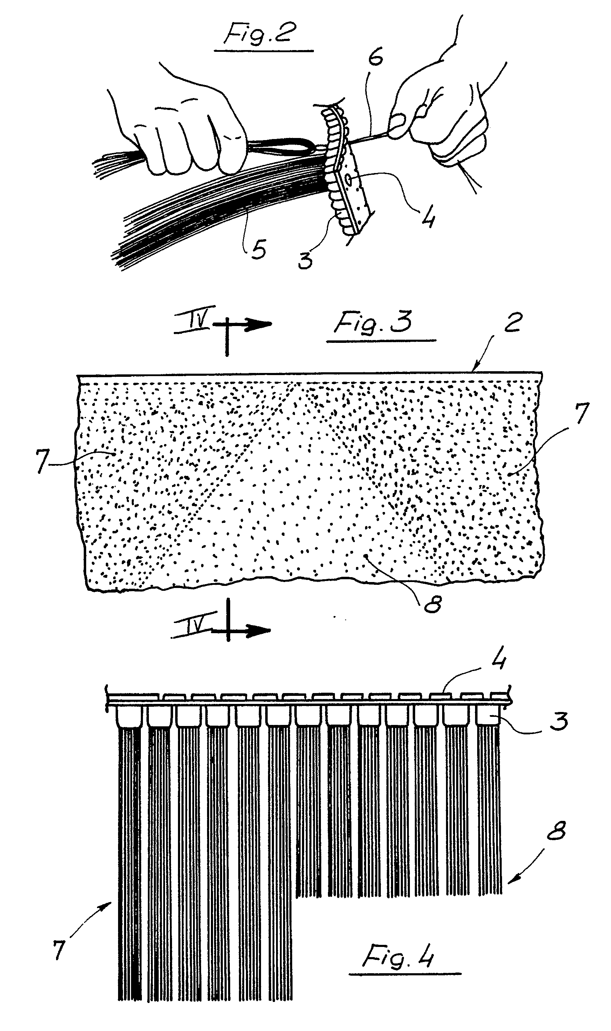

As can be seen in Figure 4, one of the faces of each strip-like element is formed with a multiplicity of projecting cylindrical sockets 3 of limited height for receiving tufts of fibres 5, whilst on the opposite face there are formed a plurality of cylindrical studs 4. Each strip-like element preferably has an elongate rectangular shape and, at each end, is provided with rounded apertures 10 or the like which can be placed in register with corresponding holes 11 formed in its opposite end to allow the ends to be connected together once the element has been wrapped around the core. For this purpose the apertures 10 each have an upstanding rim which can be engaged in a corresponding hole 11. The connections may be made by any suitable means such as screws, rivets or similar connection members.

The tufts of fibres 5, which are inserted into the cylindrical sockets 3 are preferably made of synthetic fibres such as polyethylene or other suitable plastics material, and are fixed in position by means of a stitching thread 6 passing between the studs 4. In particular, groups or tufts of fibres 5 of two different lengths are provided, these being inserted and fixed in corresponding cylindrical sockets 3 in such a way as to form triangular areas 7 of long tufts intercalated with triangular areas 8 of short tufts.

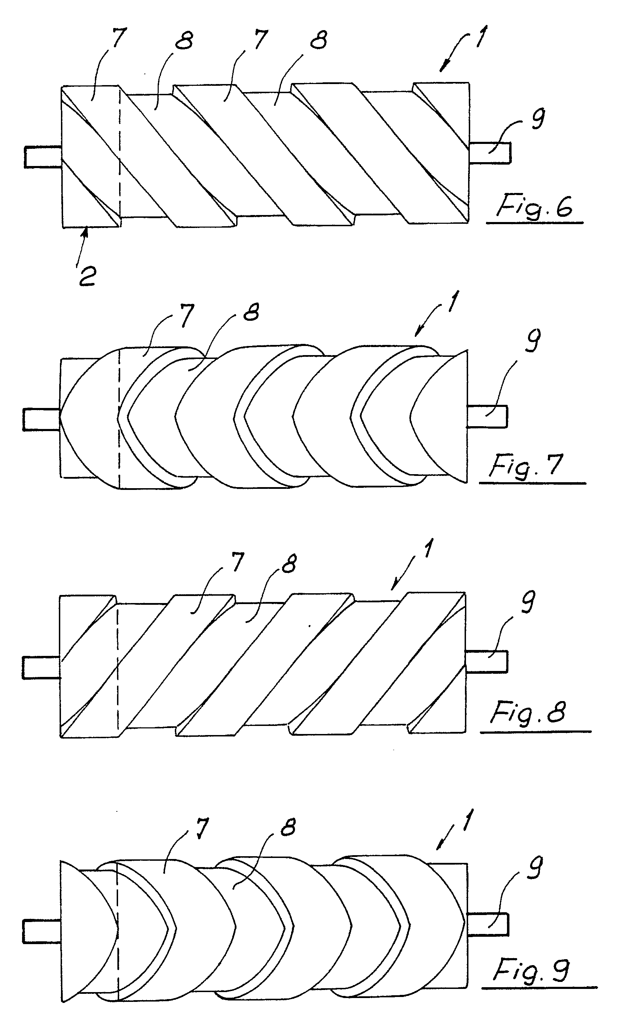

The strip-like elements 2 thus equipped with tufts of fibres are subsequently secured in position closely adjacent one another, wrapped around a support core 9 in such a way as to form thereon continuous inclined circumferential rows of long fibres alternating with correspondingly shaped continuous circumferential rows of short fibres. To achieve this, as can be seen in Figure 5, several identical strip-like elements 2 are positioned on the tubular core 9, in succession, with each strip being turned through 180° with respect to its neighbours and offset from them by half of the length of the strip.

By means of such an arrangement the brush is able, during rotation, effectively to create an axial component of movement, first in one direction and then in the other along the length of the core 9, that is transversely of the direction of advancement of the motor vehicle, and this encourages the more efficacious removal of all the particles of dirt present on the bodywork of the vehicle.

## Claims

1. A rotary brush for a motor vehicle washing installation, comprising a tubular core (9) around which are wrapped a plurality of flexible strip-like elements (2) the length of which is such that they can each be wrapped once around the core (9) in adjacent positions along the length thereof, each strip-like element (2) having a first face with a multiplicity of cylindrical sockets (3) for receiving tufts of fibres (5) and a second face having a plurality of studs (4) which come into contact with the core itself, characterized in that tufts of fibres (7) of a first length being attached in a first area or areas of the element (2) and tufts of fibres (8) of a second length being attached to the element (2) in a second area or areas thereof such that in the finished brush there are formed circumferentially extending continuous rows of fibres (7) of the first length intercalated with circumferentially extending continuous rows of fibres (8) of the second length, in that said first and second area or areas of the strip-like elements (2) are triangular in shape and in that said strip-like elements (2) are attached to the core (9) in positions such that longitudinally adjacent elements (2) are offset from one another by one half of their length, and are turned through 180° with respect to one another such that the continuous circumferential rows of tufts of fibres (5, 7, 8) lie at an angle inclined with respect to a plane of the core (9) perpendicular to the axis thereof.

2. A rotary brush according to Claim 1, characterized in that each said strip-like element (2) is formed from an elastomeric material and has an elongate rectangular shape with a plurality of apertures (10) at one end, each having a tubular projecting rim engageable in corresponding holes (11) at the opposite end when the element (2) is wrapped around the core (9), said apertures and holes allowing the element (2) to be fixed to the said core (9) by means of fixing elements such as screws, rivets or the like inserted through the apertures and holes themselves.

3. A rotary brush according to Claims 1 and 2, characterized in that the line between adjacent areas of short and long tufts of fibres (7, 8) lies at substantially 45° to the axis of the brush.

## Revendications

1. Brosse à rouleau pour installations de lavage de voitures, comprenant un noyau tubulaire (9) autour duquel il y a enroulé plusieurs éléments flexibles en forme de bande (2) dont la longueur est telle de pouvoir les enrouler chacun autour du noyau (9) dans une position adjacente le long de sa longueur, chaque élément (2) en forme de bande présentant une première face munie de plusieurs logements cylindriques (3) pour y accueillir bottes de fibres (5) et une deuxième face munie de plusieurs goujons (4) venant en contact avec le noyau lui-même, caractérisée en ce que lesdits bottes de fibres (7) d'une première longueur sont attachés dans une première portion ou dans premières portions de l'élément (2) et de bottes de fibres (8) d'une deuxième longueur sont attachés à l'élément (2) dans une deuxième portions ou dans deuxièmes portions de ceci, de façon que dans la brosse finie de rangs de fibres (7) sont formés s'étendant en continu sur le périmètre, lesdites fibres étant de la première longueur, intercalées par rangs de fibres (8) de la deuxième longueur, s'étendant en continu sur le périmètre,

en ce que lesdits éléments (2) en forme de bande sont attachés au noyau (9) dans telles positions que les éléments (1) adjacents longitudinalement sont décalés l'un l'autre pour une moitié de leur longueur et sont tournés de 180° l'un par rapport à l'autre ainsi que les rangs continus sur le périmètre de bottes de fibres (5, 7, 8) se trouvent inclinés d'un angle par rapport au plan du noyau (9) perpendiculairement à l'axe de ce dernier.

2. Brosse à rouleau selon la revendication 1, caractérisée en ce que chaque élément (2) en forme de bande se forme d'un matériel élastomère et présente une forme rectangulaire allongée avec plusieurs ouvertures (10) à l'une de ses extrémités, chacune présentant un bord tubulaire saillant et pouvant s'engager dans trous (11) correspondants sur l'extrémité opposée lorsque l'élément (2) est enroulé autour du noyau (9), lesdits ouvertures et trous permettant que l'élément (2) soit fixé audit noyau (9) au moyen d'éléments de fixage comme vis, rivets ou similaires, insérés à travers les ouvertures et les trous eux-mêmes.

3. Brosse à rouleau selon les revendication 1 et 2, caractérisée en ce que la ligne entre les portions adjacentes de bottes de fibres (7, 8) courtes et longues, se trouve dans une position essentiellement inclinée de 45° par rapport à l'axe de la brosse.

**Ansprüche**

1. Walzenbürste für Autowaschanlage, mit einem röhrformigen Kern (9), der aus mehreren lexibeln streifenförmigen Elemente (2) umgehüllt ist, deren Länge eine solche Umhüllung ermöglicht, daß jedes einzelne Element um den Kern (9) längs seiner Länge aneinanderliedend aufgerollt werden kann, wobei jedes streifenförmige Element (2) mit einer mehreren zylinderförmigen Aufnahmen (3) aufweisenden ersten Seite zum Aufnehmen von Fiberbündeln (5) und einer mehreren denselbe Kern berührenden Stifte (4) aufweisenden zweiten Seite vorgesehen ist,

dadurch gekennzeichnet, daß die obengenannte Fiberbündeln (7) einer ersten Länge in einer ersten Portion oder Portionen des Elementes (2) angebracht sind und Fiberbündeln (8) einer zweiten Länge in einer zweiten Portion oder Portionen so angebracht sind, daß die fertige Bürste mit ersterlängigen Fiberreihen (7) ausgebildet ist, die kontinuerlich um den Umfang erstrecken sich und mit zweiterlängigen um den Umfang kontinuerlich sich erstreckenden Fiberreihen (8) zwischengeschaltet sind, daß die obengenannten erste oder zweite Portion oder Portionen der streifenförmigen Elementen (2) eine dreieckige Form besitzen, und

daß die obengenannten streifenförmigen Elemente (2) an solchen Stellungen des Kernes (9) angebracht sind, daß die längsanliegenden Elemente (2) für eine Halblände aneinander versetzt liegen und um 180° aneinandergeneigt sind, sodaß die kontinuerlichen Fiberbündelreihen (5, 7, 8) auf den Umfang zur Ebene des Kernes (9) senkrecht demselben geneigt sind.

2. Walzenbürste nach Anspruch 1, dadurch gekennzeichnet, daß jedes einzelne streifenförmige Element (2) aus einem Elastomermaterial besteht und eine rechteckige verlängerte Form besitzt, die an ein Ende mit mehreren einen vorspringende röhrförmige Rand aufweisenden Öffnungen (10) vorgesehen ist,

wobei dieser Rand mit entsprechenden Löchern (11) an das andere Ende als das Element (2) um das Kern (9) aufgewickelt ist eingeklinkt werden kann,

wobei die obengenannten Löchern und Öffnungen dem Element (2) mittels durch denselben Löchern und Öffnungen eingefügten Befestigungselemente, als Schrauben, Mieten oder dergleichen, an den Kern (9) zu befestigen ermöglichen.

3. Walzenbürste nach Anspruch 1 und 2, dadurch gekennzeichnet, daß die Linie zwischen den anliegenden kurzen und langen Fiberbündeln (7, 8) wesentlich um 45° zum Bürstenachse geneigt ist.

## Fig. 1

## Fig. 5

_Fig.2_

IV →

_Fig.3_

2

7

7

7

8

IV →

4

3

3

7

8

7

_Fig. 4_

_Fig. 6_

_Fig. 7_

_Fig. 8_

_Fig. 9_